# FASCICULE DE BREVET EUROPEEN

(11) **EP 0 843 794 B1**
(45) Date de publication et mention de la délivrance du brevet: **25.09.2002**
(21) Numéro de dépôt: 97928319.9
(22) Date de dépôt: 10.06.1997
(51) Int. Cl.: F16L 13/14

(54) **DISPOSITIF DE RACCORD RAPIDE POUR CONDUIT DE FLUIDE SOUS PRESSION**
SCHNELLKUPPLUNGSVORRICHTUNG FÜR EINE UNTER MEDIENDRUCK STEHENDE FLÜSSIGKEITSLEITUNG
QUICK CONNECTION DEVICE FOR FLUID CONDUIT UNDER PRESSURE

(30) Priorité: 10.06.1996 FR 9607149
(43) Date de publication de la demande: 27.05.1998
(73) Titulaire: HUTCHINSON, 75008 Paris (FR)
(72) Inventeur: GODEAU, Denis, F-45260 Vieilles Maisons/Joudry (FR); EXANDIER, Philippe, F-45120 Chalette (FR)
(74) Mandataire: Ramey, Daniel
(86) Numéro de dépôt international: FR9701025
(87) Numéro de publication internationale: WO97047908

(56) Documents cités:
- EP-A- 0 226 743
- DE-A- 3 808 383
- DE-A- 4 329 442
- FR-A- 2 615 266
- FR-A- 2 700 195
- GB-A- 947 586
- US-A- 3 579 794
- US-A- 5 492 376

## Description

L'invention concerne un dispositif de raccord rapide pour conduit de fluide sous pression, en particulier pour véhicule automobile, et notamment un dispositif de raccord rapide pour un conduit d'un circuit de fluide sous pression élevée par exemple un circuit de direction assistée, de freinage ou de climatisation, ou pour un circuit de carburant.

On connaît déjà, par exemple par la Demande de Brevet EP-0 606 028, un dispositif de raccord rapide pour un circuit de fluide sous pression relativement faible, tel par exemple qu'un circuit de refroidissement de moteur. Ce dispositif connu comprend essentiellement un manchon en matière plastique fixé sur l'extrémité d'un conduit souple en caoutchouc ou en élastomère par l'intermédiaire d'un joint surmoulé en une matière élastiquement déformable telle que du caoutchouc ou un élastomère. Ce type de raccord fournit d'excellents résultats pour un fluide sous pression relativement faible, mais ne permettrait pas d'assurer une étanchéité suffisante s'il était utilisé dans un circuit de fluide à pression élevée.

De façon classique, les dispositifs de raccord rapide pour conduits de fluide à pression élevée sont équipés de plusieurs joints toriques rapportés dont les inconvénients essentiels sont de ne pas assurer toujours une excellente étanchéité, de nécessiter un effort de montage important et d'être sensibles à des phénomènes de fluage sous l'effet de la pression et de la température du fluide, au détriment de l'étanchéité.

La présente invention a notamment pour but d'apporter une solution simple et efficace au problème des dispositifs de raccord rapide pour circuits de fluide à pression élevée.

Elle propose à cet effet un dispositif de raccord rapide pour conduit de fluide sous pression, en particulier pour véhicule automobile, ce dispositif comprenant un manchon rigide dont une première extrémité est fixée de façon étanche sur ledit conduit et dont. une seconde extrémité est destinée à être raccordée de façon étanche à un embout tubulaire relié à un circuit de fluide sous pression, caractérisé en ce que l'étanchéité entre le manchon et l'embout est assurée par une matière élastiquement déformable telle que du caoutchouc ou un élastomère surmoulée sur la seconde extrémité du manchon, l'étanchéité entre le manchon et le conduit étant assurée par une compression d'une autre matière élastiquement déformable à la première extrémité du manchon, les extrémités (14, 46) du conduit (12, 42) et de l'embout (32) étant engagés et guidées l'une dans l'autre quand le manchon (10) est raccordé à l'embout.

La garniture d'étanchéité surmoulée à la seconde extrémité du manchon offre plusieurs avantages importants par rapport aux séries de joints toriques traditionnels :
- la surface de contact entre l'embout et la garniture d'étanchéité portée par le manchon est beaucoup plus importante, ce qui améliore nettement la qualité de l'étanchéité,
- l'effort de montage de l'embout à l'intérieur de la garniture est plus faible,
- la garniture surmoulée est insensible aux phénomènes de fluage sous l'effet de la pression et de la température du fluide.

Selon une autre caractéristique de l'invention, l'extrémité du conduit est élargie pour recevoir l'extrémité de l'embout et est engagée avec un jeu très faible ou quasi-nul à l'intérieur du manchon en venant en butée sur ladite garniture d'étanchéité.

Avantageusement, la première extrémité du manchon est sertie ou rétreinte sur le conduit.

Dans un premier mode de réalisation de l'invention, le conduit précité est rigide et l'étanchéité avec la première extrémité du manchon est assurée par une couche de matière élastiquement déformable surmoulée sur le manchon avant montage de celui-ci sur le conduit.

Dans une autre forme de réalisation de l'invention, le conduit précité est un tuyau souple en matière élastiquement déformable telle que du caoutchouc ou un élastomère et son extrémité est enfilée sur une tubulure rigide engagée dans le manchon précité et assure l'étanchéité avec la première extrémité de ce manchon.

Dans une troisième forme de réalisation de l'invention, le conduit précité est rigide et l'étanchéité avec le manchon est assurée, après disposition du manchon sur l'extrémité du conduit, par surmoulage d'au moins une matière élastiquement déformable entre la première extrémité du manchon et le conduit.

Avantageusement, la matière d'étanchéité entre la première extrémité du manchon et le conduit et la matière d'étanchéité entre la seconde extrémité du manchon et l'embout sont différentes l'une de l'autre.

On peut réaliser ainsi une économie, l'une des matières d'étanchéité étant très performante vis-à-vis du fluide sous pression mais relativement coûteuse, l'autre matière d'étanchéité étant moins performante mais moins coûteuse et n'assurant qu'une étanchéité "de secours".

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- les figures 1 et 2 sont des vues schématiques en coupe axiale d'un manchon et de l'extrémité d'un conduit de fluide sous pression ;
- la figure 3 est une vue schématique en coupe axiale représentant le manchon monté sur le conduit et engagé sur un embout tubulaire d'un circuit de fluide sous pression ;
- les figures 4, 5 et 6 sont des vues correspondant respectivement aux figures 1, 2 et 3 mais représentent un autre mode de réalisation de l'invention ;
- la figure 7 est une vue schématique en coupe axiale d'encore un autre mode de réalisation de l'invention.

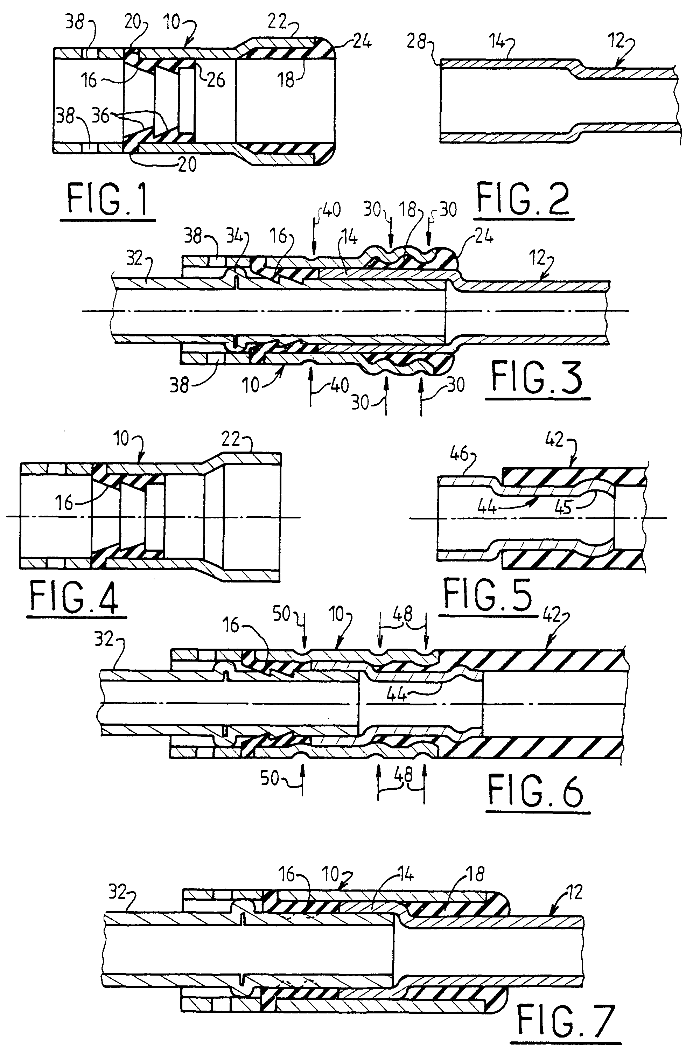

On se réfère d'abord aux figures 1 et 2 qui représentent schématiquement, en coupe axiale, un manchon 10 faisant partie d'un dispositif de raccord rapide selon l'invention et l'extrémité d'un conduit 12 de fluide sous pression.

Le manchon 10 est réalisé en une matière rigide et relativement indéformable, par exemple un métal ou une matière plastique appropriée.

Le conduit 12 de fluide sous pression est également en une matière rigide et relativement indéformable, par exemple en un métal ou une matière plastique appropriée, et comporte une extrémité cylindrique élargie 14 destinée à être engagée dans le manchon 10.

Celui-ci est équipé de deux garnitures d'étanchéité 16, 18 dont l'une 16 est surmoulée sur la face interne du manchon 10, à une certaine distance de ses extrémités, en étant injectée par exemple à l'intérieur du manchon par des trous 20 de celui-ci, l'autre garniture d'étanchéité 18 étant surmoulée sur la face interne d'une extrémité élargie 22 du manchon 10 et débordant légèrement au-delà de cette extrémité pour former un rebord annulaire 24.

Le diamètre interne de la garniture d'étanchéité 18 correspond sensiblement au diamètre externe de l'extrémité élargie 14 du conduit 12 et au diamètre interne du reste du manchon 10. L'autre garniture d'étanchéité 16 forme, à son extrémité tournée vers la garniture 18, une butée 26 en saillie sur la surface interne du manchon 10, sur laquelle peut s'appliquer la face frontale 28 de l'extrémité élargie 14 du conduit 12.

Le montage du dispositif selon l'invention est très simple :

Le manchon 10 est engagé, par son extrémité 22 sur l'extrémité élargie 14 du conduit 12 jusqu'à ce que l'extrémité 26 de la garniture 16 vienne buter sur la face frontale d'extrémité 28 du conduit 12, les garnitures 16 et 18 étant séparées l'une de l'autre pour qu'une partie médiane du manchon 10 assure un guidage de l'extrémité élargie 14 du conduit 12

La fixation du manchon 10 sur le conduit 12 peut être réalisée par sertissage ou rétreint de son extrémité élargie 22, comme indiqué schématiquement par les flèches 30 en figure 3. Eventuellement, la surface extérieure de l'extrémité élargie 14 du conduit 12 peut recevoir une couche d'un produit adhérisant, assurant une bonne liaison avec le caoutchouc ou l'élastomère de la garniture d'étanchéité 18 du manchon 10.

Le conduit 12 muni du manchon 10 peut alors être raccordé à un embout tubulaire 32 d'un circuit de fluide sous haute pression (notamment supérieure ou égale à 20 bars), cet embout 32 étant par exemple métallique et comprenant un bourrelet 34 au voisinage de son extrémité libre, ce bourrelet 34 ayant un diamètre extérieur correspondant sensiblement au diamètre interne de l'extrémité libre du manchon 10, tandis que le diamètre extérieur de l'embout 32 correspond sensiblement au diamètre interne de l'extrémité élargie 14 du conduit 12.

De cette façon, l'extrémité libre de l'embout 32 peut être engagée sur une certaine longueur à l'intérieur de l'extrémité élargie 14 du conduit 12 avec un jeu très faible ou quasi-nul, une première étanchéité étant assurée par la garniture 16 appliquée sur la surface extérieure de l'embout 32, une seconde étanchéité étant assurée par la garniture 18 entre le manchon 10 et l'extrémité élargie 14 du conduit 12.

Comme représenté schématiquement en figure 1, la surface interne de la garniture 16 peut être formée avec des nervures annulaires 36 en saillie, formant des lignes d'étanchéité successives sur la surface extérieure de l'embout 32.

La liaison entre le manchon 10 et l'embout 32 peut être assurée au moyen d'une agrafe élastique en U ou analogue, non représentée, d'un type bien connu dans la technique, qui s'engage dans des fentes 38 du manchon 10, le long du bourrelet 34 de l'embout 32 qui est ainsi retenu à l'intérieur du manchon 10.

Un sertissage ou un rétreint peut également être réalisé sur le manchon 10 comme indiqué par les flèches 40, au niveau de la garniture d'étanchéité 16 pour assurer une meilleure étanchéité entre l'embout 32 et le manchon 10.

Dans ce dispositif selon l'invention, la garniture d'étanchéité 16 peut être réalisée dans une matière telle que celle commercialisée sous la dénomination "VITTON" ou en un caoutchouc nitrile halogéné, c'est-à-dire en une matière qui résiste bien à une pression et à une température élevées du fluide, ainsi qu'à une nature chimiquement agressive dans le cas d'un fluide réfrigérant, la matière de l'autre garniture d'étanchéité étant moins coûteuse et par exemple du type EPDM ou analogue.

Dans la variante de réalisation représentée schématiquement aux figures 4 à 6, le manchon 10 ne comprend qu'une garniture d'étanchéité 16 surmoulée au voisinage de son extrémité coopérant avec l'embout 32, son extrémité élargie 22 en étant dépourvue, et le conduit de fluide 42 est un tuyau souple à base de matière élastiquement déformable telle que du caoutchouc ou un élastomère, dont l'extrémité est engagée sur une tubulure rigide 44 en métal ou en matière plastique appropriée, formée avec une extrémité élargie 46 dont le diamètre extérieur correspond sensiblement au diamètre intérieur de l'extrémité élargie 22 du manchon 10 et dont le diamètre interne correspond sensiblement à celui de la garniture d'étanchéité 16.

L'extrémité opposée 45 de la tubulure 44, située à l'intérieur du tuyau souple 42, peut être expansée radialement vers l'extérieur pour participer à la fixation du tuyau 42 sur la tubulure 44.

Au montage, et comme dans le mode de réalisation précédent, l'extrémité élargie 22 du manchon 10 est enfilée sur l'extrémité élargie 46 de la tubulure 44 et est sertie sur cette tubulure comme indiqué en 48, le tuyau 42 jouant le rôle d'une garniture d'étanchéité entre l'extrémité 22 du manchon 10 et la tubulure 44.

La face frontale de l'extrémité élargie 46 de la tubulure 44 est en butée sur la garniture d'étanchéité 16 du manchon 10, l'embout tubulaire 32 du circuit de fluide est engagé à l'intérieur du manchon 10 et de l'extrémité élargie 46 de la tubulure 44, comme dans le mode de réalisation précédent, et le manchon 10 peut être serti, comme indiqué en 50, au niveau de la garniture d'étanchéité 16 pour améliorer l'étanchéité avec l'embout tubulaire 32.

Dans la variante de réalisation de la figure 7, le manchon 10 est parfaitement cylindrique et a un diamètre interne constant sur toute sa longueur, correspondant au diamètre externe de l'extrémité élargie 14 du conduit de fluide 12 qui est identique à celui représenté en figure 2.

Au montage, le manchon 10 est enfilé sur l'extrémité élargie 14 du conduit 12, de façon à s'étendre de part et d'autre de cette extrémité élargie 14, puis l'ensemble est placé dans un moule et les garnitures d'étanchéité 16 et 18 analogues à celles représentées en figure 1 sont formées par injection d'une ou deux matières d'étanchéité d'une part à l'intérieur du manchon 10 jusqu'à la face frontale de l'extrémité élargie 14 du conduit 12, d'autre part entre l'extrémité du manchon 10 et la face externe du conduit 12.

Dans ce cas, ce sont les garnitures d'étanchéité 16, 18 qui réalisent la fixation du manchon 10 sur le conduit 12.

Le dispositif ainsi obtenu est utilisé comme celui des figures 1 et 2, l'extrémité libre de l'embout tubulaire 32 du circuit de fluide étant engagée à l'intérieur du manchon 10 et de la garniture d'étanchéité 16 ainsi qu'à l'intérieur de l'extrémité élargie 14 du conduit 12.

Les dispositifs qui viennent d'être décrits se caractérisent par des efforts de montage relativement faibles sur les embouts 32 dûs à l'utilisation de garnitures d'étanchéité surmoulées à la place de joints toriques. De plus, et comme on le voit bien sur les figures 3, 6 et 7, les garnitures d'étanchéité 16 sont protégées contre les phénomènes de fluage résultant de la pression et de la température du fluide. Les garnitures d'étanchéité 16 et 18 réalisent une étanchéité à deux niveaux, sur des surfaces beaucoup plus étendues que celles de joints toriques, de sorte que l'on obtient une étanchéité excellente vis-à-vis de fluides sous pression élevée.

En variante, les garnitures d'étanchéité 16 et/ou 18 peuvent être surmoulées sur la surface extérieure du manchon 10. Par exemple, le manchon 10 de la figure 7 peut comporter deux garnitures d'étanchéité 16, 18 surmoulées sur sa surface extérieure et engagées dans les extrémités élargies du conduit 12 et de l'embout 32, qui sont alors des pièces femelles.

## Revendications

1. Dispositif de raccord rapide comprenant un conduit de fluide (12, 42) sous pression, un embout tubulaire (32) relié à un circuit de fluide sous pression et un manchon rigide (10) dont une première extrémité est fixée de façon étanche sur ledit conduit (12, 42) et dont une seconde extrémité est destinée à être raccordée de façon étanche à l'embout tubulaire (32), **caractérisé en ce que** l'étanchéité entre le manchon (10) et l'embout (32) est assurée par une première garniture (16) de matière élastiquement déformable, surmoulée sur la seconde extrémité du manchon (10), l'étanchéité entre le manchon (10) et le conduit (12) étant assurée par compression d'une seconde garniture (18, 42) de matière élastiquement déformable qui est située à la première extrémité du manchon, les extrémités (14, 46) du conduit (12, 42) et de l'embout (32) étant engagées et guidées l'une dans l'autre quand le manchon (10) est raccordé à l'embout.

2. Dispositif selon la revendication 1, **caractérisé en ce que** la matière constituant la première garniture d'étanchéité (16) et la matière constituant la seconde garniture d'étanchéité (18), sont différentes l'une de l'autre.

3. Dispositif selon la revendications 1 ou 2, **caractérisé en ce que** le conduit (12) est rigide et l'étanchéité avec la première extrémité du manchon (10) est assurée par la seconde garniture (18) de matière élastiquement déformable qui est surmoulée sur le manchon (10) avant montage de celui-ci sur le conduit (12).

4. Dispositif selon la revendication 3, **caractérisé en ce que** la seconde garniture (18) de matière élastiquement déformable surmoulée sur la première extrémité du manchon (10) est adhérisée sur le conduit (12).

5. Dispositif selon la revendication 1 ou 2, **caractérisé en ce que** ledit conduit est un tuyau souple (42) à base de matière élastiquement déformable telle que du caoutchouc ou un élastomère, dont l'extrémité est enfilée sur une tubulure rigide (44) et forme la première garniture d'étanchéité avec la première extrémité du manchon (10).

6. Dispositif selon la revendication 1 ou 2, **caractérisé en ce que** ledit conduit (12) est rigide et l'étanchéité avec le manchon (10) est assurée, après disposition du manchon sur l'extrémité du conduit (12), par la seconde garniture d'étanchéité (18) obtenue par surmoulage d'au moins une matière élastiquement déformable entre la première extrémité du manchon (10) et le conduit (12) et sur la surface interne de la seconde extrémité du manchon (10).

7. Dispositif selon l'une quelconque des revendications précédentes, **caractérisé en ce que** ladite première garniture (16) recouvre la surface intérieure de la seconde extrémité du manchon (10) et comprend des nervures circulaires (36) sur sa surface interne, destinées à former des lignes d'étanchéité sur la surface extérieure de l'embout (32).

8. Dispositif selon l'une quelconque des revendications précédentes, **caractérisé en ce que** l'extrémité (14) du conduit (12) est élargie pour recevoir ledit embout (32) avec un jeu faible ou quasi-nul et est engagée avec un jeu faible ou quasi-nul à l'intérieur du manchon (10), en venant en butée sur ladite première garniture d'étanchéité (16) de la seconde extrémité du manchon.

9. Dispositif selon l'une quelconque des revendications précédentes, **caractérisé en ce que** la première extrémité du manchon (10) est sertie ou rétreinte à étanchéité sur le conduit (12).

10. Dispositif selon l'une quelconque des revendications précédentes, **caractérisé en ce que** la seconde extrémité du manchon (10) est sertie ou rétreinte sur ledit embout (32) au niveau de la première garniture d'étanchéité surmoulée (16).

## Patentansprüche

1. Schnellkopplungsvorrichtung mit einer Leitung (12, 42) für ein unter Druck stehendes Fluid, einem röhrenförmigen Ansatz (32), der mit einem unter Druck stehenden Kreislauf bzw. einer unter Druck stehenden Leitung verbunden ist, und einer starren Muffe (10), von der ein erstes Ende dichtend an der Leitung (12, 42) befestigt und ein zweites Ende für den dichtenden Anschluß an den röhrenförmigen Ansatz (32) vorgesehen ist, **dadurch gekennzeichnet, daß** die Dichtigkeit zwischen der Muffe (10) und dem Ansatz (32) mittels einer ersten Dichtung (16) aus elastisch verformbarem Material hergestellt wird, die auf das zweite Ende der Muffe (10) aufgeformt ist, wobei die Dichtigkeit zwischen der Muffe (10) und der Leitung (12) durch Pressen einer zweiten Dichtung (18, 42) aus einem elastisch verformbaren Material hergestellt ist, die am ersten Ende der Muffe angeordnet ist, wobei die Enden (14, 46) der Leitung (12, 42) und des Ansatzes (32) ineinander eingreifen und geführt sind, wenn die Muffe (10) am Ansatz angeschlossen ist.

2. Vorrichtung nach Anspruch 1, **dadurch gekennzeichnet, daß** das Material, aus dem die erste Dichtung (16) besteht, und das Material, aus dem die zweite Dichtung (18) besteht, voneinander verschieden sind.

3. Vorrichtung nach Anspruch 1 oder 2, **dadurch gekennzeichnet, daß** die Leitung (12) starr ist, und die Dichtigkeit mit dem ersten Ende der Muffe (10) mittels der zweiten Dichtung (18) aus einem elastisch verformbaren Material hergestellt wird, die vor dem Anbringen der Muffe (10) an der Leitung (12) auf die Muffe aufgeformt ist.

4. Vorrichtung nach Anspruch 3, **dadurch gekennzeichnet, daß** die zweite Dichtung (18) aus einem auf das erste Ende der Muffe (10) aufgeformten, elastisch verformbaren Material durch eine Haftverbindung an der Leitung (12) angebracht ist.

5. Vorrichtung nach Anspruch 1 oder 2, **dadurch gekennzeichnet, daß** die Leitung ein biegsamer Schlauch (42) auf Basis eines elastisch verformbaren Materials wie Gummi oder einem Elastomer ist, dessen Ende auf eine starre Röhre (44) aufgesteckt ist und mit dem ersten Ende der Muffe (10) die erste Dichtung bildet.

6. Vorrichtung nach Anspruch 1 oder 2, **dadurch gekennzeichnet, daß** die Leitung (12) starr ist, und die Dichtigkeit mit der Muffe (10) nach dem Vorsehen der Muffe am Ende der Leitung (12) durch die zweite Dichtung (18) hergestellt wird, die durch Aufformen von mindestens einem elastisch verformbaren Material zwischen dem ersten Ende der Muffe (10) und der Leitung (12) und der Innenfläche des zweiten Endes der Muffe (10) hergestellt ist.

7. Vorrichtung nach einem der vorhergehenden Ansprüche, **dadurch gekennzeichnet, daß** die erste Dichtung (16) die Innenfläche des zweiten Endes der Muffe (10) bedeckt und Ringrippen (36) auf der Innenfläche aufweist, die dazu bestimmt sind, Dichtlinien auf der Außenfläche des Ansatzes (32) zu bilden.

8. Vorrichtung nach einem der vorhergehenden Ansprüche, **dadurch gekennzeichnet, daß** das Ende (14) der Leitung (12) so erweitert ist, daß es den Ansatz (32) mit einem geringen bzw. im wesentlichen Null betragenden Spiel bedeckt und mit einem geringen bzw. im wesentlichen Null betragenden Spiel in das Innere der Muffe (10) eingesetzt ist, wobei es an der ersten Dichtung (16) des zweiten Endes der Muffe anstößt.

9. Vorrichtung nach einem der vorhergehenden Ansprüche, **dadurch gekennzeichnet, daß** das erste Ende der Muffe (10) dichtend auf der Leitung (12) verpreßt oder eingeschnürt ist.

10. Vorrichtung nach einem der vorhergehenden Ansprüche, **dadurch gekennzeichnet, daß** das zweite Ende der Muffe (10) auf dem Ansatz (32) auf Höhe der aufgeformten ersten Dichtung (16) verpreßt oder eingeschnürt ist.

## Claims

1. A quick-coupling device comprising a fluid duct (12, 42) for fluid under pressure, a tubular endpiece (32) connected to a circuit for fluid under pressure, and a rigid sleeve (10) having a first end fixed in sealed manner on said duct (12, 42) and having a second end for coupling in sealed manner to the tubular endpiece (32), the device being **characterized in that** sealing between the sleeve (10) and the endpiece (32) is provided by a first lining (16) of elastically-deformable material overmolded on the second end of the sleeve (10), with sealing between the sleeve (10) and the duct (12) being provided by compressing a second lining (18, 42) of elastically-deformable material which is situated at the first end of the sleeve, the ends (14, 46) of the duct (12, 42) and of the endpiece (32) being engaged and guided one within the other when the sleeve (10) is coupled to the endpiece.

2. A device according to claim 1, **characterized in that** the material constituting the first sealing lining (16) and the material constituting the second sealing lining (18) are different from each other.

3. A device according to claim 1 or claim 2, **characterized in that** the duct (12) is rigid, and sealing with the first end of the sleeve (10) is provided by the second lining (18) of elastically-deformable material which is overmolded on the sleeve (10) before it is mounted on the duct (12).

4. A device according to claim 3, **characterized in that** the second lining (18) of elastically-deformable material overmolded on the first end of the sleeve (10) is bonded onto the duct (12).

5. A device according to claim 1 or claim 2, **characterized in that** said duct is a flexible hose (42) based on an elastically-deformable material such as rubber or an elastomer, the end of which is engaged on a rigid tube (44) and forms the first sealing lining with the first end of the sleeve (10).

6. A device according to claim 1 or claim 2, **characterized in that** said duct (12) is rigid and sealing with the sleeve (10) is provided, after the sleeve has been placed on the end of the duct (12), by the second sealing lining (18) obtained by overmolding at least one elastically-deformable material between the first end of the sleeve (10) and the duct (12) and over the inside surface of the second end of the sleeve (10).

7. A device according to any preceding claim, **characterized in that** said first lining (16) covers the inside surface of the second end of the sleeve (10) and includes circular ribs (36) on its inside surface for forming lines of sealing on the outside surface of the endpiece (32).

8. A device according to any preceding claim, **characterized in that** the end (14) of the duct (12) is enlarged to receive said endpiece (32) with clearance that is small or substantially zero, and is engaged with clearance that is small or substantially zero inside the sleeve (10), coming into abutment against said first sealing lining (16) of the second end of the sleeve.

9. A device according to any preceding claim, **characterized in that** the first end of the sleeve (10) is crimped or swaged in sealed manner on the duct (12).

10. A device according to any preceding claim, **characterized in that** the second end of the sleeve (10) is crimped or swaged on said endpiece (32) level with the first overmolded sealing lining (16).
